# NOUVEAU FASCICULE DE BREVET EUROPEEN

(11) **EP 1 448 368 B2**
(45) Date de publication et mention de la décision concernant l'opposition: **18.06.2014**
(45) Mention de la délivrance du brevet: 01.03.2006
(21) Numéro de dépôt: 02779049.2
(22) Date de dépôt: 19.11.2002
(51) Int. Cl.: B32B 3/04, B32B 5/26, E04B 1/78

(54) **PRODUIT D'ISOLATION ENCAPSULE ET PROCEDE POUR SA FABRICATION**
EINGEKAPSELTES ISOLIERUNGSPRODUKT UND DESSEN HERSTELLUNGSVERFAHREN
ENCAPSULATED INSULATING PRODUCT AND METHOD FOR MAKING SAME

(30) Priorité: 19.11.2001 BE 200100752
(43) Date de publication de la demande: 25.08.2004
(73) Titulaire: Knauf Insulation SA, 4600 Visé (BE)
(72) Inventeur: VANTILT, Pierre, B-3700 Tongeren (BE); CORTEIL, Philippe, B-4801 Stembert (BE)
(74) Mandataire: Farmer, Guy Dominic
(86) Numéro de dépôt international: PCT/BE2002/000174
(87) Numéro de publication internationale: WO 2003/043811

(56) Documents cités:
- EP-A- 0 839 968
- WO-A1-94/29540
- JP-A- 55 164 150
- US-A- 2 028 253
- US-A- 5 169 700
- US-A- 5 240 527
- US-A- 5 277 955
- US-A- 5 848 509

## Description

La présente invention est relative à un produit d'isolation encapsulé, comprenant un matelas de fibres, qui s'étend longitudinalement et comporte une première et une deuxième surfaces principales opposées, une première et une deuxième surfaces latérales opposées, et une première et une deuxième surfaces d'extrémité opposées, et un revêtement recouvrant les deux surfaces principales et les deux surfaces latérales du matelas, ce revêtement comportant un premier moyen de recouvrement en forme de bande qui couvre au moins une partie centrale de la première surface principale du matelas sans s'étendre au-delà de cette première surface et en étant liée à celle-ci, et un deuxième moyen de recouvrement qui couvre successivement la deuxième surface principale du matelas, ses deux surfaces latérales et des parties marginales de sa première surface principale, le deuxième moyen de recouvrement étant lié à la première surface principale et flottant librement le long des surfaces latérales opposées du matelas (voir US-A-5240527).

On connaît depuis longtemps de tels produits qui, par leur encapsulation, permettent une manipulation sans contact avec le noyau de fibres, contact qui peut s'avérer incommode et même irritant pour l'opérateur. Des pertes de particules de fibres vers l'extérieur, avec formation éventuelle de poussières, peuvent ainsi être évitées. Par ailleurs, l'aspect extérieur du produit est mieux fini, même à l'état enroulé du noyau de fibres en forme de matelas.

On peut citer par exemple, en plus du brevet US-A-5240527 précité les demandes de brevet japonaises 51-064584, 52-135383 et 55-164150. Dans ces documents de brevet, une deuxième bande de recouvrement est liée uniquement à la première surface principale par l'intermédiaire de la première bande de recouvrement. Il n'y a aucune liaison de la deuxième bande de recouvrement ni avec la deuxième surface principale du matelas de fibres, ni avec les surfaces latérales. Ces produits présentent donc une faiblesse mécanique notoire par le fait qu'ils sont susceptibles d'être délaminés, un déplacement respectif entre le matelas et les bandes de recouvrement étant difficilement évitable. En vue de tenter de remédier à cet inconvénient, on peut prévoir au moment de l'encapsulation et du collage de presser énergiquement chaque constituant du produit l'un sur l'autre. Mais, dans ce cas, le matelas de fibres se trouve encapsulé, dans un état fortement comprimé, ce qui réduit son pouvoir d'isolation.

On connaît également un produit d'isolation encapsulé de ce genre, dans lequel une deuxième bande de recouvrement est en outre liée à la deuxième surface principale et à au moins une surface latérale, de préférence aux deux surfaces latérales (v. WO 97/08401). Le problème du délaminage du produit composite est ainsi largement surmonté. Toutefois, l'encapsulage est tel que l'air présent dans le matelas de fibres minérales ne peut guère s'échapper lorsque le matelas est enroulé après sa fabrication. Il en résulte une difficulté d'enroulement du produit et, pour un même volume de rouleau, on peut stocker une moins grande longueur de produit.

On connaît en outre des systèmes de fixation mutuelle de deux bandes de recouvrement autour d'un matelas de fibres, par exemple à l'aide de pattes repliées à partir de ces bandes en faisant latéralement saillie hors du produit, de manière à pouvoir être collées l'une à l'autre (v. EP-A-0839968 et US-A-2028253). La présence de ces pattes présente un inconvénient majeur dans l'application de rouleaux l'un à côté de l'autre. La fabrication s'avère plus complexe et l'emballage en rouleaux plus compliqué.

On connaît aussi des produits d'isolation dans lesquels le matelas de fibres est emballé par un film perforé pour permettre d'améliorer l'évacuation de l'air du matelas lors de sa compression et le retour du matelas dans sa forme initiale lors de l'application du produit sur le site à isoler (v. US-A-5362539). Ces perforations ont évidemment pour effet d'affaiblir le film d'emballage vis-à-vis des sollicitations mécaniques. Fig 5 du document US 5,169,700 expose un matelas de fibres ayant un revêtement 54 recouvrant une de ses surfaces principales, et un autre revêtement 38 recouvrant son autre surface principale. Fig 6 de ce document expose une configuration dans laquelle trois matelas 46 sont empilées, un film 56 est attaché aux deux revêtements 38 et 54.

La présente invention a pour but de proposer un produit d'isolation encapsulé tel qu'indiqué au début, qui permette à la fois une protection pour l'opérateur et l'environnement, une bonne résistance au délaminage, et une aptitude satisfaisante à la compression, puis à une expansion automatique du matelas de fibres lorsque la sollicitation à la compression disparaît. Avantageusement, ce produit doit présenter aussi un aspect extérieur fini, commercialement favorable et facile à stocker et à appliquer.

On a résolu ces problèmes suivant l'invention par un produit encapsulé tel qu'indiqué au début dans lequel le deuxième moyen de recouvrement est simultanément lié à la deuxième surface principale et dans lequel le produit d'isolation encapsulé comprend un seul matelas de fibres. Par le fait que le premier moyen de recouvrement en forme de bande est fermement fixé à la première surface principale du matelas de fibres et que le deuxième moyen de recouvrement est fermement fixé à la deuxième surface principale et aussi à la première surface principale, à ses parties marginales, le produit présente une résistance mécanique au délaminage irréprochable. Par ailleurs, les côtés flottants du revêtement permettent à l'air de s'échapper facilement du produit lors de l'étape de compression, au cours de son enroulement en rouleaux, et au produit de recouvrer son épaisseur initiale lors du déroulement des rouleaux. Tout cela, sans devoir prévoir d'ouvertures dans le revêtement, ni de microperforations, qui affaiblissent celui-ci.

Suivant une forme de réalisation de l'invention, le deuxième moyen de recouvrement est une bande de matière non tissée. Le revêtement du produit est ainsi formé de deux bandes de recouvrement. Comme matière non tissée appropriée pour la deuxième bande de recouvrement, on peut par exemple citer du polypropylène (PP), ou du polyester (PES) par exemple.

Suivant une autre forme de réalisation de l'invention le deuxième moyen de recouvrement est constitué d'un ruban central qui couvre au moins une partie centrale de la deuxième surface principale du matelas et qui est lié à celle-ci, et de deux rubans latéraux rattachés au ruban central de part et d'autre de celui-ci, chaque ruban latéral passant de manière flottante le long d'une surface latérale du matelas, et couvrant au moins une partie marginale de la première surface principale du matelas et au moins une partie marginale de la deuxième surface principale en étant lié à celles-ci.

Le revêtement du produit est ainsi formé de quatre pièces différentes, la première bande de recouvrement, le ruban central, et les rubans latéraux, qui peuvent ainsi chacun être de nature différente selon la fonction qu'on leur attribue et les propriétés qu'on en attend. Cela permet aussi d'optimaliser la résistance mécanique de l'ensemble, par exemple en déterminant les largeurs de double recouvrement sur les première et deuxième surfaces principales du matelas.

Suivant une forme de réalisation avantageuse de l'invention, le ruban central du deuxième moyen de recouvrement est un ruban pare-vapeur qui peut couvrir la totalité de la deuxième surface principale du noyau. On obtient ainsi un produit d'isolation particulièrement approprié par l'isolation de maisons d'habitation, qui empêche une pénétration d'humidité dans le matelas de fibres, et donc les inconvénients associés à cette pénétration.

Les pare-vapeur utilisés dans des produits d'isolation suivant l'invention sont bien connus de l'homme de métier. On peut par exemple envisager une feuille de papier avantageusement de type Kraft qui est revêtue d'un film polymère coextrudé ou d'un film en matière plastique, éventuellement métallisé, ou encore d'un film d'aluminium.

Les rubans latéraux sont de préférence en une matière non tissée, avantageusement très souple pour leur permettre de gondoler lors d'une compression du produit. On peut envisager par exemple du polypropylène (PP), ou du polyester (PES).

La première bande de recouvrement peut être en une matière tissée ou non tissée. On peut envisager par exemple un non tissé de polyester ou de polyester/viscose ou encore un voile de verre.

D'autres formes de réalisation du produit suivant l'invention sont indiquées dans les revendications annexées.

La présente invention concerne également un procédé de fabrication de produit d'isolation encapsulé suivant l'invention.

On prévoit, suivant l'invention, un tel procédé comprenant un dépôt du premier moyen de recouvrement en forme de bande sur la première surface principale du matelas de fibres et sa liaison à celle-ci, une application du deuxième moyen de recouvrement sur la deuxième surface principale du matelas de fibres et sa liaison à celle-ci, un rabattement du deuxième moyen de recouvrement le long des surfaces latérales opposées du matelas et un repli du deuxième moyen de recouvrement sur au moins les parties marginales de la première surface principale avec liaison du deuxième moyen de recouvrement à celle-ci, de façon qu'il flotte librement le long des surfaces latérales opposées du matelas.

Suivant une forme de réalisation avantageuse de réalisation du procédé suivant l'invention, le deuxième moyen de recouvrement est constitué d'un ruban central et de deux rubans latéraux et le procédé comprend en outre, avant ou pendant l'application du deuxième moyen de recouvrement sur la deuxième surface principale du matelas, un rattachement des rubans latéraux au ruban central, de part et d'autre de celui-ci.

La liaison des moyens de recouvrement aux première et deuxième surfaces du matelas et des moyens de recouvrement entre eux, ainsi que le rattachement des rubans latéraux au ruban central peuvent s'effectuer par tout moyen connu du spécialiste. On envisage de préférence un collage par un adhésif approprié.

D'autres modes de réalisation du procédé suivant l'invention sont indiqués dans les revendications annexées.

D'autres détails et particularités de l'invention ressortiront de la description donnée ci-après, à titre non limitatif, et avec référence aux dessins annexés.

Les figures 1 et 2 représentent une vue en coupe transversale d'un produit d'isolation suivant l'invention, à l'état expansé et respectivement à l'état comprimé.

Les figures 3 à 5 représentent les étapes de trois modes de réalisation différents d'un produit d'isolation suivant l'invention, représentés sous une forme partiellement brisée.

Sur les dessins, les éléments identiques ou analogues sont désignés par les mêmes références. Il faut noter que sur ces dessins les proportions des éléments ne correspondent pas à la réalité et certaines valeurs ont été exagérées pour permettre une meilleure compréhension.

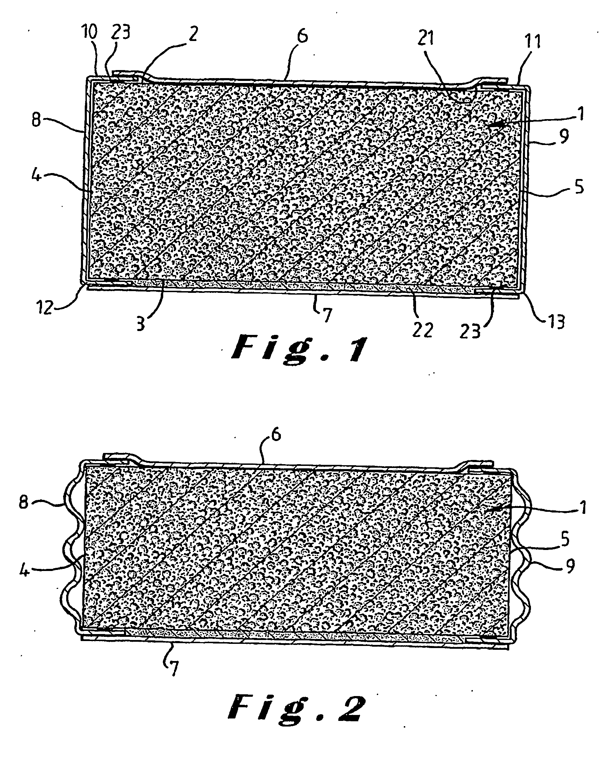

Sur la figure 1, on a représenté une vue en coupe d'une forme de réalisation de produit d'isolation, thermique ou acoustique, suivant l'invention.

Ce produit, tel qu'illustré, comprend un seul matelas 1 de fibres de verre ou de fibres minérales qui s'étend longitudinalement. Dans la vue en coupe transversale, on peut observer que ce matelas présente une première surface principale 2, une deuxième surface principale opposée 3, une première surface latérale 4, et une deuxième surface latérale opposée 5. Le produit a également deux surfaces d'extrémité opposées non représentées sur les dessins.

Un revêtement recouvre les deux surfaces principales 2 et 3 et les deux surfaces latérales 4 et 5.

Dans l'exemple de réalisation illustré, ce revêtement comporte une bande de recouvrement 6 en matière non tissée, par exemple en polyester, qui couvre une partie centrale de la première surface principale 2. Elle n'atteint pas tout à fait les bords de celle-ci, bien que cela soit envisageable.

Le revêtement comporte aussi un moyen de recouvrement formé de trois rubans, un ruban pare-vapeur 7 courant qui couvre au moins une partie centrale et de préférence toute la deuxième surface principale 3 du matelas et deux rubans latéraux 8 et 9 rattachés au ruban pare-vapeur, de part et d'autre de celui-ci. Chaque ruban latéral passe de manière flottante le long des surfaces latérales 4 et 5 du matelas, c'est-à-dire qu'il n'est pas fixé à celles-ci.

Comme on peut le voir sur les figures 1 et 2, la bande de recouvrement 6 est, dans l'exemple de réalisation illustré, liée à la surface principale 2, par exemple par une couche de liant thermofusible 21 qui permet l'adhésion de la bande 6 sur la fibre de verre du matelas 2 et sur les bords latéraux 10 et 11 repliés des rubans latéraux 8 et 9.

Le pare-vapeur 7 est, dans l'exemple de réalisation illustré, un film de matière plastique aluminisé qui est lié à la surface principale 3 et sur les bords latéraux 12 et 13 des rubans latéraux 8 et 9, par exemple par une couche de colle à base de polyacétate de vinyle 22.

Les bords 10 et 12 et respectivement 11 et 13 des rubans latéraux sont eux-mêmes liés directement à la surface principale 2 et respectivement à la surface principale 3 par un liant thermofusible 23 par exemple. En variante, on peut prévoir de ne pas lier directement les bords 12 et 13 à la surface principale 3, leur liaison étant alors obtenue par l'intermédiaire du ruban pare-vapeur.

Il est évident que les bords des rubans latéraux 4 et 5 peuvent être prévus fixés aux surfaces principales, non pas en contact direct avec le matelas, mais aussi par l'intermédiaire de la bande de recouvrement 6 et/ou du ruban pare-vapeur 7. Ceux-ci sont alors intercalés entre les bords des rubans latéraux et le matelas.

Comme on peut le voir sur la figure 2, lorsque le matelas est à l'état comprimé, les rubans latéraux 8 et 9, en gondolant, s'écartent du matelas 1 et laissent l'air contenu dans celui-ci se dégager aisément.

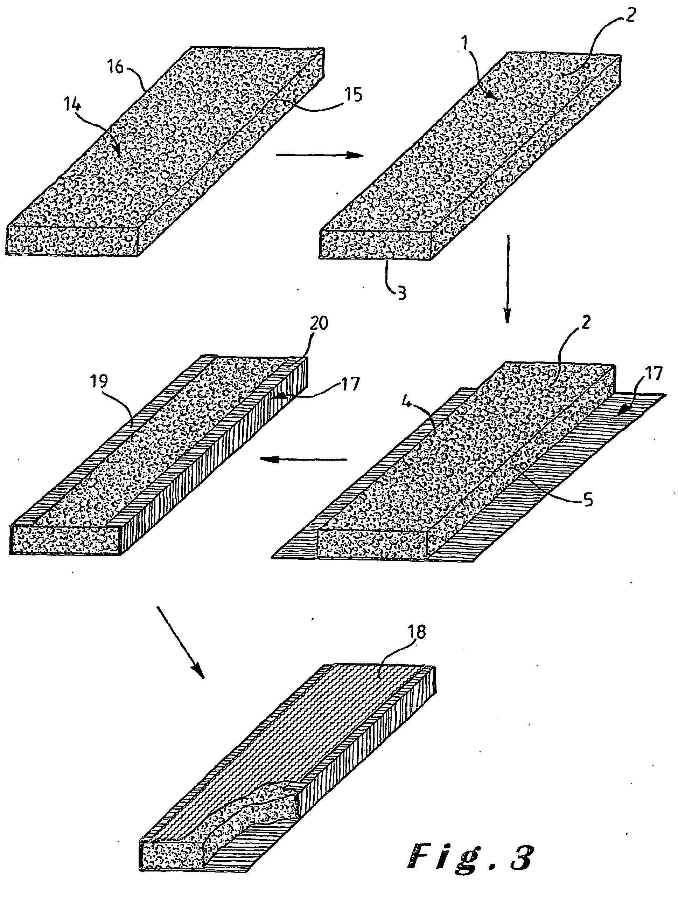

Sur la figure 3, on a illustré un mode de fabrication de produit d'isolation suivant l'invention dans lequel un pare-vapeur n'est pas nécessaire.

Un noyau 14 de fibres de verre est tout d'abord formé, et ensuite il est passé au travers d'un four de polymérisation qui va permettre de lier les fibres l'une à l'autre par un liant polymérisable par lequel les fibres ont été préalablement traitées d'une manière connue. A la sortie, le noyau 14 est découpé le long de ses bords 15 et 16 pour donner, après découpe, un matelas 1 ayant une largeur définitive, prédéterminée.

Une colle de type thermofusible est appliquée alors sur toute la surface principale 3 du matelas et sur les bords longitudinaux de la surface principale 2. Puis une bande de recouvrement 17 en une matière non tissée appropriée est appliquée et collée sur la surface principale 3 du matelas.

Par des moyens appropriés, connus de l'homme de métier, la bande de recouvrement 17 est d'abord rabattue le long des surfaces latérales opposées 4 et 5 du matelas, puis repliée sur les bords préalablement encollés de la surface principale 2, en étant ainsi liée à celle-ci.

Dans la dernière étape, une bande de recouvrement 18 en matière non tissée préalablement enduite d'une matière adhésive par exemple de type thermofusible est déposée sur la surface principale 2 du matelas en recouvrant celle-ci et une partie des bords repliés supérieurs 19 et 20 de la bande de recouvrement 17. En variante, on peut bien entendu prévoir que la matière adhésive soit préalablement appliquée sur la laine de verre du matelas, au lieu de la bande de recouvrement.

Une liaison ferme est ainsi obtenue avec les deux surfaces principales opposées du matelas, mais sans liaison avec les surfaces latérales. Le produit fabriqué présente un aspect fini, très avantageux. Il comporte uniquement deux bandes de recouvrement pour encapsuler le matelas de fibres et il peut être comprimé et expansé sans problème, sans risque de délaminage entre les constituants.

Il faut noter que cette fabrication a avantageusement lieu sur une ligne qui déplace le matelas en continu. Les appareillages d'encollage, de déroulement, de transport ou de repli des bandes ou du matelas, ainsi que le four de polymérisation sont des dispositifs connus en soi, pour l'homme de métier.

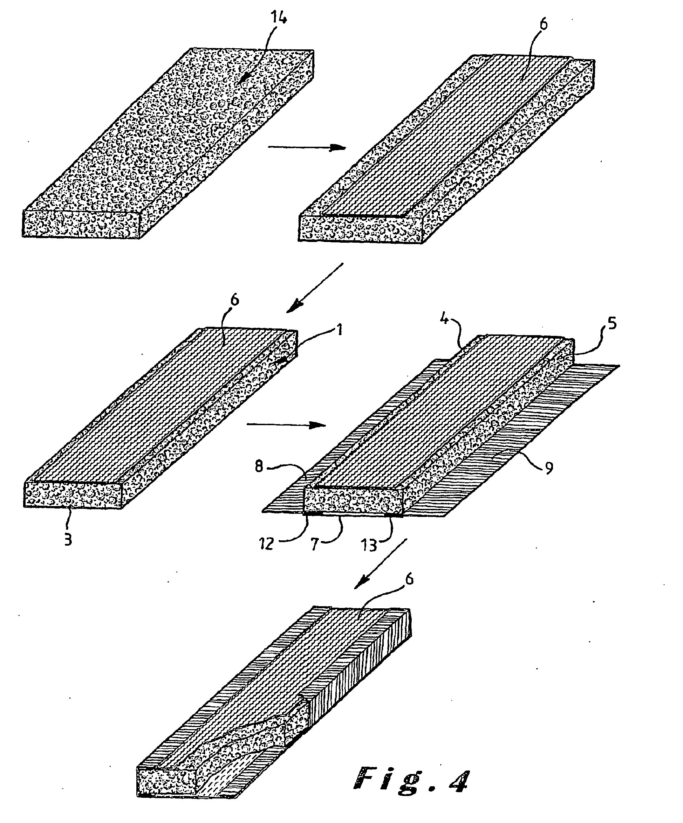

La figure 4 illustre un mode de fabrication d'une forme de réalisation avantageuse d'un produit d'isolation suivant l'invention, dans lequel un ruban pare-vapeur a été prévu.

Dans cette forme de réalisation, le revêtement servant à l'encapsulage est constitué de quatre pièces : une bande de revêtement 6 en matière non tissée, un ruban pare-vapeur 7 et deux rubans latéraux 8 et 9 en matière non tissée.

Dans cet exemple de réalisation, la bande de revêtement 6 en matière non tissée, enduite d'un liant par exemple phénolique, est déposée sur le noyau de fibres 14, avant son passage dans le four de polymérisation. La bande 6 est ainsi liée au noyau 14 pendant ce passage.

Après sortie du four, les bords latéraux du noyau 14 sont découpés ce qui donne le matelas 1 d'épaisseur définie.

Un ruban pare-vapeur 7 courant en soi et auquel sont rattachés de part et d'autre, par exemple par collage, des rubans latéraux 8 et 9 en matière non tissée, est appliqué sur la surface principale 3 du matelas. Le ruban pare-vapeur est par exemple un papier Kraft plastifié et pourvu sur sa face supérieure d'une colle moussée à l'aide de laquelle le papier adhère à la surface principale 3 et aux bords latéraux 12 et 13 des rubans latéraux 8 et 9.

Les rubans latéraux sont alors rabattus le long des surfaces latérales 4 et 5 du matelas, puis repliés par-dessus celui-ci et des parties marginales de la bande 6. Sur la face interne des bords des rubans latéraux ou aux bords des surfaces principales 2 et 3 on a prévu la présence d'un adhésif permettant de lier les rubans latéraux à ces surfaces et à la bande 6 en matière non tissée.

L'adhésion des rubans latéraux aux surfaces principales ou à la bande 6 peut être obtenue par n'importe quelle colle appropriée, par exemple par un polyacétate de vinyle moussé ou non, par une colle thermofusible ou par une colle réactivable.

Comme on peut le remarquer, il est possible par ce mode de fabrication d'appliquer un encapsulage composite où chaque constituant présente une composition optimale en fonction de ce à quoi il sert. De plus, les angles du produit peuvent être renforcés par une double épaisseur de matière ce qui améliore leur résistance mécanique. Enfin, sur la ligne de production, les postes d'application ne doivent pas tous se trouver au même endroit, ce qui permet de faciliter les opérations. Un marquage différent des pièces constitutives est aussi permis. Par exemple on peut introduire un logo sur la bande de recouvrement 6 et des marquages de longueur sur les rubans latéraux.

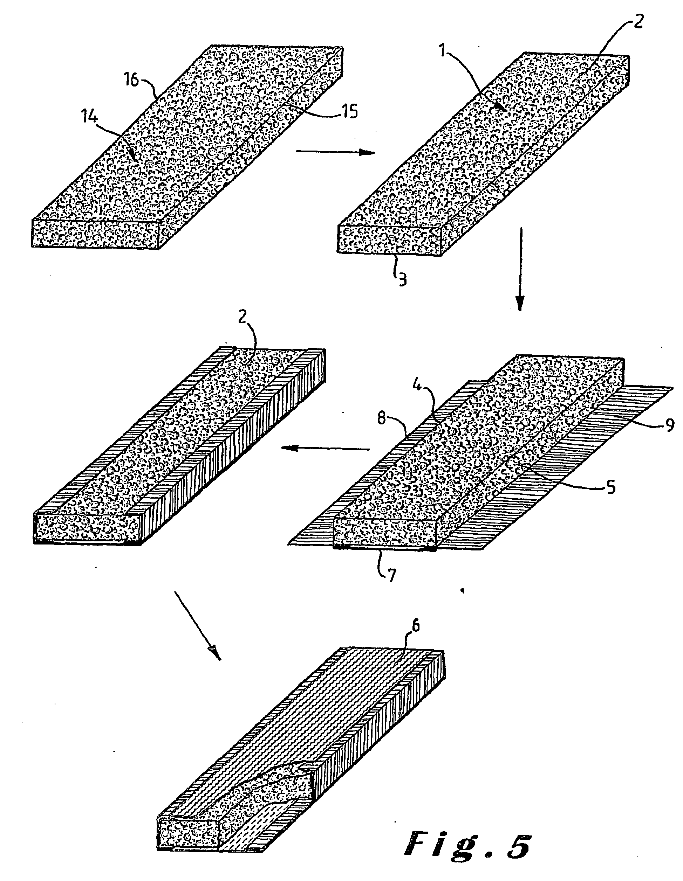

La figure 5 illustre un mode de fabrication d'une forme de réalisation de produit d'isolation tel que représenté sur les figures 1 et 2.

Dans cet exemple, le noyau 14 sort du four de polymérisation et il est tout de suite découpé à la largeur requise pour former le matelas 1. Les deux rubans latéraux 8 et 9 sont alors déroulés en même temps que le ruban pare-vapeur 7. Par application sur la surface principale 3, ils sont par une couche d'adhésif liés au ruban pare-vapeur 7 préalablement encollé. Les rubans sont ensuite rabattus le long des surfaces latérales 4 et 5 du matelas, puis repliés contre la surface principale 2 à laquelle ils sont liés de la manière déjà décrite.

Par-dessus cela est alors déposé une bande de recouvrement 6, qui est collée à son tour sur la surface principale 2 du matelas et sur les bords repliés des rubans latéraux.

Il doit être entendu que la présente invention n'est en aucune façon limitée aux formes de réalisation décrites ci-dessus et que bien des modifications peuvent y être apportées, sans sortir du cadre des revendications annexées.

## Revendications

1. Produit d'isolation encapsulé, comprenant
- un seul matelas (1) de fibres, qui s'étend longitudinalement et comporte une première (2) et une deuxième (3) surfaces principales opposées, une première (4) et une deuxième (5) surfaces latérales opposées, et une première et une deuxième surfaces d'extrémité opposées, et
- un revêtement recouvrant les deux surfaces principales et les deux surfaces latérales du matelas,
- ce revêtement comportant un premier moyen de recouvrement en forme de bande (6, 18) qui couvre au moins une partie centrale de la première surface principale (2) du matelas, sans s'étendre au-delà de cette première surface et en étant liée à celle-ci, et un deuxième moyen de recouvrement (7-9 : 17) qui couvre successivement la deuxième surface principale (3) du matelas, ses deux surfaces latérales (4, 5) et des parties marginales de sa première surface principale (2),
le deuxième moyen de recouvrement (7-9; 17) étant lié à la première surface principale (2) et flottant librement le long des surfaces latérales opposées (4, 5) du matelas (1), **caractérisé en ce que** le deuxième moyen de recouvrement est simultanément lié à la deuxième surface principale (3).

2. Produit d'isolation suivant la revendication 1, **caractérisé en ce que** le deuxième moyen de recouvrement est une bande de matière non tissée (17).

3. Produit d'isolation suivant la revendication 1, **caractérisé en ce que** le deuxième moyen de recouvrement est constitué
- d'un ruban central (7) qui couvre au moins une partie centrale de la deuxième surface principale (3) du matelas et qui est lié à celle-ci, et
- de deux rubans latéraux (8, 9) rattachés au ruban central (7), de part et d'autre de celui-ci, chaque ruban latéral passant de manière flottante le long d'une surface latérale (4, 5) du matelas, et couvrant au moins une partie marginale de la première surface principale (2) du matelas et au moins une partie marginale de sa deuxième surface principale (3) en étant lié à celles-ci.

4. Produit d'isolation suivant la revendication 3, **caractérisé en ce que** le ruban central (7) du deuxième moyen de recouvrement est un ruban pare-vapeur qui peut couvrir la totalité de la deuxième surface principale (3) du noyau.

5. Produit d'isolation suivant l'une des revendications 3 et 4, **caractérisé en ce que** les rubans latéraux (8, 9) du deuxième moyen de recouvrement sont en une matière non tissée.

6. Produit d'isolation suivant l'une quelconque des revendications 3 à 5, **caractérisé en ce que** chaque ruban latéral (8, 9) du deuxième moyen de recouvrement est en appui direct sur la deuxième surface principale (3) du matelas en étant, dans cette position, recouvert partiellement par le ruban central (7) du deuxième moyen de recouvrement susdit.

7. Produit d'isolation suivant l'une des revendications 3 à 6, **caractérisé en ce que** chaque ruban latéral (8, 9) du deuxième moyen de recouvrement est en appui direct sur la première surface principale (2) du matelas, en étant, dans cette position, éventuellement recouvert partiellement par le premier moyen de recouvrement en forme de bande (6, 18).

8. Produit d'isolation suivant l'une des revendications 3 à 6, **caractérisé en ce que** chaque ruban latéral (8, 9) du deuxième moyen de recouvrement recouvre au moins partiellement le premier moyen de recouvrement en forme de bande (6, 18) lié à la première surface principale (2) du matelas et **en ce qu'**il est lié au premier moyen de recouvrement en forme de bande (6, 18).

9. Produit d'isolation suivant l'une quelconque des revendications 1 à 8, **caractérisé en ce que** le premier moyen de recouvrement en forme de bande (6, 18) est en une matière tissée ou non tissée.

10. Procédé de fabrication d'un produit d'isolation suivant l'une quelconque des revendications 1 à 9, comprenant
- un dépôt du premier moyen de recouvrement en forme de bande sur la première surface principale du matelas de fibres et sa liaison à celle-ci,
- une application du deuxième moyen de recouvrement sur la deuxième surface principale du matelas de fibres et sa liaison à celle-ci,
- un rabattement du deuxième moyen de recouvrement le long des surfaces latérales opposées du matelas, et
- un repli du deuxième moyen de recouvrement sur au moins les parties marginales de la première surface principale avec liaison du deuxième moyen de recouvrement à celle-ci, de façon qu'il flotte librement le long des surfaces latérales opposées du matelas.

11. Procédé suivant la revendication 10, **caractérisé en ce que** le dépôt du premier moyen de recouvrement en forme de bande a lieu avant ledit repli du deuxième moyen de recouvrement, de façon que celui-ci, après repli, recouvre au moins partiellement des bords du premier moyen de recouvrement en forme de bande, et **en ce que** le procédé comprend en outre une liaison entre le deuxième moyen de recouvrement et lesdits bords du premier moyen de recouvrement en forme de bande, de façon que ladite liaison du deuxième moyen de recouvrement à la première surface principale ait lieu par l'intermédiaire du premier moyen de recouvrement en forme de bande.

12. Procédé suivant la revendication 10, **caractérisé en ce que** ledit repli du deuxième moyen de recouvrement a lieu avant ledit dépôt du premier moyen de recouvrement en forme de bande de façon qu'il soit lié à la première surface principale en appui direct sur celle-ci.

13. Procédé suivant l'une quelconque des revendications 10 à 12, **caractérisé en ce que** le deuxième moyen de recouvrement est constitué d'un ruban central et de deux rubans latéraux et **en ce que** le procédé comprend en outre, avant ou pendant l'application du deuxième moyen de recouvrement sur la deuxième surface principale du matelas, un rattachement des rubans latéraux au ruban central, de part et d'autre de celui-ci.

14. Procédé suivant l'une quelconque des revendications 10 à 13, **caractérisé en ce qu'**il comprend en outre une polymérisation d'un liant par lequel les fibres du matelas sont traitées et une découpe à dimensions du matelas après polymérisation.

15. Procédé suivant la revendication 14, **caractérisé en ce que**, pour ladite polymérisation, il comprend un passage du matelas de fibres dans un four de polymérisation, après ledit dépôt du premier moyen de recouvrement en forme de bande, et **en ce que** la liaison de celui-ci à la première surface principale du matelas a lieu dans le four.

16. Procédé suivant la revendication 14, **caractérisé en ce que** la polymérisation et la découpe à dimensions ont lieu avant ledit dépôt du premier moyen de recouvrement en forme de bande et ladite application du deuxième moyen de recouvrement.

## Patentansprüche

1. Eingekapseltes Isolationsprodukt, umfassend:
- Eine einzige Fasermatte (1), die sich in Längsrichtung erstreckt und eine erste (2) und eine zweite (3), einander gegenüberliegende Hauptflächen, eine erste (4) und eine zweite (5), einander gegenüberliegende Seitenflächen sowie eine erste und eine zweite, einander gegenüberliegende Endflächen aufweist, und
- eine Umkleidung, welche die beiden Hauptflächen und die beiden Seitenflächen der Matte überdeckt, wobei
- die Umkleidung ein erstes Abdeckmittel in Gestalt eines Bandes (6, 18) einschließt, das wenigstens einen Mittelteil der ersten Hauptfläche (2) der Matte bedeckt, ohne sich über diese erste Fläche hinaus zu erstrecken, und mit dieser verbunden ist, und ein zweites Abdeckmittel (7-9; 17), das nacheinander die zweite Hauptfläche (3) der Matte, ihre beiden Seitenflächen (4, 5) und Randpartien ihrer ersten Hauptfläche (2) bedeckt, wobei
- das zweite Abdeckmittel (7-9; 17) mit der ersten Hauptfläche (2) verbunden ist und entlang der einander gegenüberliegenden Seitenflächen (4, 5) der Matte frei schwebt, **dadurch gekennzeichnet, dass** das zweite Abdeckmittel gleichzeitig mit der zweiten Hauptfläche (3) verbunden ist.

2. Isolationsprodukt nach Anspruch 1, **dadurch gekennzeichnet, dass** das zweite Abdeckmittel ein Band aus nicht gewebtem Material (17) ist.

3. Isolationsprodukt nach Anspruch 1, **dadurch gekennzeichnet, dass** das zweite Abdeckmittel besteht aus:
- einem zentralen Band (7), welches wenigstens einen Mittelteil der zweiten Hauptfläche (3) der Matte bedeckt und mit dieser verbunden ist, und aus
- zwei am zentralen Band (7) zu beiden Seiten desselben befestigten Seitenbändern (8, 9), wobei jedes Seitenband in schwebender Weise entlang einer Seitenfläche (4, 5) der Matte verläuft und wenigstens eine Randpartie der ersten Hauptfläche (2) der Matte und wenigstens eine Randpartie ihrer zweiten Hauptfläche überdeckt, wobei es mit diesen verbunden ist.

4. Isolationsprodukt nach Anspruch 3, **dadurch gekennzeichnet, dass** das zentrale Band (7) des zweiten Abdeckmittels ein Dampf absperrendes Band ist, welches die Gesamtheit der zweiten Hauptfläche (3) des Kernes überdecken kann.

5. Isolationsprodukt nach einem der Ansprüche 3 und 4, **dadurch gekennzeichnet, dass** die Seitenbänder (8, 9) des zweiten Abdeckmittels aus einem nicht gewebten Material bestehen.

6. Isolationsprodukt nach einem der Ansprüche 3 bis 5, **dadurch gekennzeichnet, dass** jedes Seitenband (8, 9) des zweiten Abdeckmittels in direkter Auflage auf der zweiten Hauptfläche (3) der Matte ist und in dieser Position teilweise von dem zentralen Band (7) des zweiten Abdeckmittels überdeckt ist.

7. Isolationsprodukt nach einem der Ansprüche 3 bis 6, **dadurch gekennzeichnet, dass** jedes Seitenband (8, 9) des zweiten Abdeckmittels in direkter Auflage auf der ersten Hauptfläche (2) der Matte ist, wobei es in dieser Position gegebenenfalls teilweise von dem ersten Abdeckmittel, das in Form eines Bandes (6, 18) vorliegt, überdeckt ist.

8. Isolationsprodukt nach einem der Ansprüche 3 bis 6, **dadurch gekennzeichnet, dass** jedes Seitenband (8, 9) des zweiten Abdeckmittels das erste in Gestalt eines Bandes (6, 18) vorliegende Abdeckmittel, welches mit der ersten Hauptfläche (2) der Matte verbunden ist, wenigstens teilweise überdeckt, und dass es mit dem ersten, bandförmigen Abdeckmittel (6, 18) verbunden ist.

9. Isolationsprodukt nach einem der Ansprüche 1 bis 8, **dadurch gekennzeichnet, dass** das erste, bandförmige Abdeckmittel (6, 18) aus einem gewebten oder nicht gewebten Material besteht.

10. Verfahren zum Herstellen eines Isolationsproduktes nach einem der Ansprüche 1 bis 9, umfassend:
- Auflegen des ersten bandförmigen Abdeckmittels auf die erste Hauptfläche der Fasermatte und Verbinden mit dieser,
- Aufbringen des zweiten Abdeckmittels auf die zweite Hauptfläche der Fasermatte und Verbinden mit dieser,
- Umschlagen des zweiten Abdeckmittels entlang der einander gegenüberliegenden Seitenflächen der Matte und
- Umfalten des zweiten Abdeckmittels auf wenigstens die Randpartien der ersten Hauptfläche und Verbinden des zweiten Abdeckmittels mit derselben derart, dass es entlang der einander gegenüberliegenden Seitenflächen der Matte frei schwebt.

11. Verfahren nach Anspruch 10, **dadurch gekennzeichnet, dass** das Auflegen des ersten, bandförmigen Abdeckmittels vor dem Umfalten des zweiten Abdeckmittels derart erfolgt, dass dieses nach dem Umfalten Ränder des ersten, bandförmigen Abdeckmittels wenigstens teilweise überdeckt, und dass das Verfahren außerdem eine Verbindung zwischen dem zweiten Abdeckmittel und den Rändern des ersten, bandförmigen Abdeckmittels derart umfasst, dass die Verbindung des zweiten Abdeckmittels mit der ersten Hauptfläche unter Vermittlung des ersten, bandförmigen Abdeckmittels stattfindet.

12. Verfahren nach Anspruch 10, **dadurch gekennzeichnet, dass** das Umfalten des zweiten Abdeckmittels vor dem Auflegen des ersten, bandförmigen Abdeckmittels derart erfolgt, dass es mit der ersten Hauptfläche in direkter Auflage auf derselben verbunden ist.

13. Verfahren nach einem der Ansprüche 10 bis 12, **dadurch gekennzeichnet, dass** das zweite Abdeckmittel von einem zentralen Band und von zwei seitlichen Bändern gebildet ist, und dass das Verfahren außerdem vor oder während des Aufbringens des zweiten Abdeckmittels auf die zweite Hauptfläche der Matte eine Befestigung der seitlichen Bänder am zentralen Band, und zwar zu beiden Seiten desselben, umfasst.

14. Verfahren nach einem der Ansprüche 10 bis 13, **dadurch gekennzeichnet, dass** es außerdem eine Polymerisierung eines Bindemittels, mit dem die Fasern der Matte behandelt werden, sowie nach der Polymerisierung eine Beschneidung auf die Abmessringen der Matte umfasst.

15. Verfahren nach Anspruch 14, **dadurch gekennzeichnet, dass** es zur Polymerisierung einen Durchlauf der Fasermatte durch einen Polymerisationsofen nach dem Auflegen des ersten, bandförmigen Abdeckmittels umfasst, und dass die Verbindung desselben mit der ersten Hauptfläche der Matte im Ofen stattfindet.

16. Verfahren nach Anspruch 14, **dadurch gekennzeichnet, dass** die Polymerisierung und die Beschneidung auf die Abmessungen vor dem Auflegen des ersten bandförmigen Abdeckmittels und dem Aufbringen des zweiten Abdeckmittels stattfinden.

## Claims

1. Encapsulated insulation product comprising
- a single mattress (1) of fibres, which extends longitudinally and comprises first (2) and second (3) opposite principal surfaces, first (4) and second (5) opposite lateral surfaces, and first and second opposite end faces, and
- a cladding covering the two principal surfaces and the two lateral surfaces of the mattress,
- this cladding comprising a first covering means in the form of a band (6,18) which covers at least a central part of the first principal surface (2) of the mattress, without extending beyond this first surface and whilst being connected thereto, and a second covering means (7-9; 17) which successively covers the second principal surface (3) of the mattress, its two lateral surfaces (4, 5) and marginal parts of its first principal surface (2),
the second covering means (7-9; 17) being connected to the first principal surface (2) and floating freely along the opposite lateral surfaces (4, 5) of the mattress (1), **characterised in that** the second covering means is simultaneously connected to the second principal surface (3).

2. Insulation product according to claim 1, **characterised in that** the second covering means is a band of non-woven material (17).

3. Insulation product according to claim 1, **characterised in that** the second covering means consists of
- a central strip (7) which covers at least a central part of the second principal surface (3) of the mattress and which is connected thereto, and
- two lateral strips (8, 9) attached to the central strip (7), on each side thereof, each lateral strip passing in a floating manner along a lateral surface (4, 5) of the mattress, and covering at least a marginal part of the first principal surface (2) of the mattress and at least a marginal part of its second principal surface (3) whilst being connected to these.

4. Insulation product according to claim 3, **characterised in that** the central strip (7) of the second covering means is a vapour-arresting strip which can cover the whole of the second principal surface (3) of the core.

5. Insulation product according to one of claims 3 and 4, **characterised in that** the lateral strips (8, 9) of the second covering means are made from a non-woven material.

6. Insulation product according to any one of claims 3 to 5, **characterised in that** each lateral strip (8, 9) of the second covering means is in direct abutment on the second principal surface (3) of the mattress whilst, in this position, being partially covered by the central strip (7) of the abovementioned second covering means.

7. Insulation product according to one of claims 3 to 6, **characterised in that** each lateral strip (8, 9) of the second covering means is in direct abutment on the first principal surface (2) of the mattress, whilst, in this position, possibly being covered partially by the first covering means in the form of a band (6, 18).

8. Insulation product according to one of claims 3 to 6, **characterised in that** each lateral strip (8, 9) of the second covering means at least partially covers the first covering means in the form of a band (6, 18) connected to the first principal surface (2) of the mattress and **in that** it is connected to the first covering means in the form of a band (6, 18).

9. Insulation product according to any one of claims 1 to 8, **characterised in that** the first covering means in the form of a band (6, 18) is made from a woven or non-woven material.

10. Method of manufacturing an insulation product according to any one of claims 1 to 9, comprising
- a depositing of the first covering in the form of a band on the first principal surface of the mattress of fibres and its connection thereto,
- an application of the second covering means to the second principal surface of the mattress of fibres and its connection thereto,
- a folding over of the second covering means along the opposite lateral surfaces of the mattress, and
- a folding of the second covering means over at least the marginal parts of the first principal surface with connection of the second covering means to this, so that it floats freely along the opposite lateral surfaces of the mattress.

11. Method according to claim 10, **characterised in that** the depositing of the first covering means in the form of a band takes place before the said folding of the second covering means, so that the latter, after folding, at least partially covers the edges of the first covering means in the form of a band, and **in that** the method also comprises a connection between the second covering means and the said edges of the first covering means in the form of a band, so that the said connection of the second covering means to the first principal surface takes place by means of the first covering means in the form of a band.

12. Method according to claim 10, **characterised in that** the said folding of the second covering means takes place before the said depositing of the first covering means in the form of a band so that it is connected to the first principal surface in direct abutment thereon.

13. Method according to any one of claims 10 to 12, **characterised in that** the second covering means consists of a central strip and two lateral strips and **in that** the method also comprises, before or during the application of the second covering means to the second principal surface of the mattress, an attachment of the lateral strips to the central strip, on each side thereof.

14. Method according to any one of claims 10 to 13, **characterised in that** it also comprises a polymerisation of a binder by means of which the fibres of the mattress are treated and a cutting of the mattress to size after polymerisation.

15. Method according to claim 14, **characterised in that**, for the said polymerisation, it comprises a passage of the mattress of fibres through a polymerisation oven, after the said depositing of the first covering means in the form of a band, and **in that** the connection of the latter to the first principal surface of the mattress takes place in the oven.

16. Method according to claim 14, **characterised in that** the polymerisation and the cutting to size take place before the said depositing of the first covering means in the form of a band and the said application of the second covering means.
